# FASCICULE DE BREVET EUROPEEN

(11) **EP 1 733 447 B1**
(45) Date de publication et mention de la délivrance du brevet: **04.12.2013**
(21) Numéro de dépôt: 05739711.9
(22) Date de dépôt: 02.03.2005
(51) Int. Cl.: H01M 8/04, B60K 11/02

(54) **DISPOSITIF ET PROCEDE DE REFROIDISSEMENT D'UN ENSEMBLE DE GENERATION D'ELECTRICITE COMPRENANT UNE PILE A COMBUSTIBLE.**
EINRICHTUNG UND VERFAHREN ZUM KÜHLEN EINER ELEKTRIZITÄTSERZEUGUNGSEINHEIT MIT EINER BRENNSTOFFZELLE
DEVICE AND METHOD FOR COOLING A ELECTRICITY GENERATING UNIT COMPRISING A FUEL CELL

(30) Priorité: 31.03.2004 FR 0403344
(43) Date de publication de la demande: 20.12.2006
(73) Titulaire: Renault SAS, 92100 Boulogne Billancourt (FR)
(72) Inventeur: YU, Robert, F-78990 ELANCOURT (FR)
(86) Numéro de dépôt international: PCT/FR2005/050138
(87) Numéro de publication internationale: WO 2005/096424

(56) Documents cités:
- WO-A-2004/006376
- DE-A- 10 152 233
- FR-A- 2 816 258
- FR-A- 2 830 926
- US-B1- 6 432 568

## Description

La présente invention concerne un dispositif et un procédé de refroidissement d'un ensemble de génération d'électricité comprenant une pile à combustible, équipant notamment un véhicule automobile.

Les piles à combustible permettent la génération d'électricité par une réaction électrochimique entre un élément anodique et un élément cathodique, et sont connues pour alimenter en énergie des moteurs électriques de véhicules à propulsion électrique.

Les piles à combustible nécessitent une alimentation en carburant constituée d'un gaz riche en hydrogène. L'alimentation peut être assurée, dans le cas d'une application à un véhicule de transport, par stockage d'hydrogène dans un réservoir embarqué. Le stockage d'hydrogène à bord d'un véhicule présente cependant des dangers et requiert des réservoirs de masse élevée. Une solution intéressante consiste à fabriquer l'hydrogène in situ à partir d'un carburant facilement stockable dans le véhicule, tel que le méthanol ou l'essence, au moyen d'un reformeur. Lors de la procédure de reformage, la quantité d'eau nécessaire pour permettre de transformer le carburant et de produire de l'hydrogène est non négligeable. Dans ces conditions, pour qu'une pile à combustible soit utilisable dans le cas d'une application à un véhicule de transport, il est indispensable de prévoir de refroidir les gaz d'échappement de la pile à combustible à une température relativement basse et inférieure à la température de la pile afin de récupérer la vapeur d'eau contenue dans les gaz pour que le volume d'eau consommé par la pile à combustible soit inférieur ou égal au volume d'eau produit, en d'autres termes pour que le bilan d'eau de la pile à combustible soit positif. En outre, avant l'introduction de l'hydrogène dans la pile à combustible, il est également nécessaire de le refroidir à la température de fonctionnement de la pile afin d'éviter une condensation pouvant provoquer un disfonctionnement.

Les piles à combustible nécessitent également une alimentation en air comprimé. L'alimentation peut être assurée par un compresseur. Une solution intéressante consiste à utiliser un compresseur à deux étages afin de garder un bon rendement. L'air sortant du compresseur doit cependant être refroidi, avant d'être introduit dans la pile à combustible, à une température proche de la température de la pile afin d'éviter d'assécher la membrane de la pile.

Les piles à combustibles fonctionnent à une température optimale de 80°C à 90°C. Lors de leur démarrage, il faut donc qu'elles atteignent rapidement cette température et par la suite, il est nécessaire de les refroidir de façon homogène pour qu'elles puissent fonctionner le plus souvent à cette température afin d'optimiser leur rendement. Il est également nécessaire de refroidir les électroniques de puissances et le moteur électrique du véhicule automobile avec de l'eau à basse température.

Pour assurer le bon fonctionnement d'un véhicule de transport muni d'une pile à combustible, il est donc nécessaire de prévoir un dispositif permettant de faire fonctionner rapidement la pile à combustible à sa température optimale lors d'un démarrage à froid et permettant de refroidir de manière appropriée l'ensemble des éléments permettant la production d'électricité à différents niveaux de température.

On connaît, par la demande de brevet US 2002/000 4152 un dispositif permettant de refroidir une pile à combustible, l'air ainsi que l'hydrogène, produit par un reformeur, alimentant respectivement la cathode et l'anode de la pile à combustible. Un tel dispositif ne prévoit pas de moyens permettant de refroidir les gaz d'échappement de la pile à combustible afin que la pile à combustible puisse être autonome afin d'être applicable à un véhicule de transport.

La demande de brevet EP-A-0 741 428 prévoit un dispositif de refroidissement d'une pile à combustible comprenant un circuit principal d'eau pure dé-ionisée, traversant la pile à combustible et équipé d'un échangeur thermique traversé par le premier fluide du circuit principal et par un second fluide d'un circuit secondaire apte à refroidir le premier fluide. Le circuit secondaire comprend également un moyen apte à chauffer le second fluide lors du démarrage à froid de la pile à combustible afin qu'elle atteigne rapidement sa température de fonctionnement optimale. Un tel dispositif possède l'inconvénient de ne pas prévoir le refroidissement d'éléments autres que la pile à combustible et nécessite un moyen spécifique afin d'assurer une mise en température rapide de la pile à combustible lors d'une phase de démarrage à froid.

La demande de brevet DE 101 52 233 décrit un dispositif de refroidissement pour module de puissance muni d'une pile à combustible et comprenant un premier circuit de fluide caloporteur traversant la pile, et un second circuit de fluide caloporteur refroidissant un radiateur, les fluides caloporteurs véhiculés par les premier et second circuits réalisant entre eux un échange thermique à l'intérieur d'une pompe à chaleur de manière que la température du second circuit soit inférieure à celle du premier circuit.

La présente invention a pour objet de prévoir un dispositif permettant un refroidissement approprié d'un ensemble de génération d'électricité comprenant une pile à combustible et permettant d'assurer de façon simplifiée et économique une mise en température rapide de la pile à combustible lors d'une phase de démarrage.

A cet effet, le dispositif de refroidissement pour un ensemble de génération d'électricité comprenant une pile à combustible notamment pour véhicule automobile, comprend un circuit principal de fluide caloporteur traversant la pile à combustible et un premier radiateur en aval de la pile à combustible, ainsi qu'un circuit auxiliaire de fluide caloporteur en dérivation sur le circuit principal pour recevoir une partie du fluide caloporteur issu du premier radiateur et comprenant un second radiateur, en aval du premier radiateur, apte à refroidir le fluide caloporteur à une température inférieure à la température du fluide caloporteur dans le circuit principal.

Un tel dispositif présente l'avantage de permettre un refroidissement par le circuit principal et/ou par le circuit secondaire, chacun des circuits ayant un niveau de température différent. Il devient ainsi possible de refroidir les éléments de l'ensemble de génération d'électricité, avec le même fluide caloporteur, à différentes températures.

Un tel dispositif, de construction particulièrement simple, permet également d'engendrer un coût restreint de fabrication. Il nécessite uniquement de prévoir un circuit auxiliaire de fluide caloporteur, en dérivation sur le circuit principal, comprenant un second radiateur. Il n'est pas nécessaire de prévoir la circulation d'un autre fluide, par exemple un fluide frigorigène, engendrant un surcoût énergétique particulièrement important afin d'obtenir une température de refroidissement relativement basse.

Dans un mode de réalisation, le circuit auxiliaire de fluide caloporteur comprend une conduite d'entrée en aval du premier radiateur et une conduite de retour en amont d'une pompe, située en amont de la pile à combustible.

Le circuit auxiliaire de fluide caloporteur peut avantageusement comprendre une conduite d'entrée en amont de la pile à combustible et une conduite de retour en amont d'une pompe, située en amont de la pile à combustible.

Le dispositif de refroidissement peut avantageusement comprendre une unique pompe permettant la circulation du fluide caloporteur dans le circuit principal et dans le circuit auxiliaire.

Un tel dispositif présenté l'avantage d'être particulièrement économique en permettant une circulation par une seule pompe, dans des circuits distincts, d'un fluide caloporteur à des niveaux de températures différents.

Le premier radiateur peut être disposé au niveau d'une branche de dérivation du circuit principal, comprenant un premier moyen d'obturation de la circulation du fluide caloporteur apte à isoler le premier radiateur du circuit principal de fluide caloporteur.

De préférence, la circuit auxiliaire comprend un second moyen d'obturation de la circulation du fluide caloporteur apte à isoler le deuxième radiateur du circuit auxiliaire de fluide caloporteur.

Un tel dispositif présente l'avantage de pouvoir isoler le premier et le second radiateur pendant la phase de démarrage à froid. Le fluide caloporteur n'étant pas refroidi, il chauffe la pile à combustible et permet ainsi de réduire le temps mis par la pile pour atteindre sa température de fonctionnement optimal sans avoir recours à un moyen spécifique supplémentaire pour réaliser un apport d'énergie thermique.

Le premier et/ou le deuxième moyen d'obturation peuvent être commandés par la température du fluide caloporteur.

Ce dispositif présente l'avantage de pouvoir se réguler tout seul, il n'est pas nécessaire de prévoir des actionneurs de régulation spécifiques pour commander les moyens d'obturation.

Dans un mode de réalisation, le dispositif comprend un reformeur alimentant en hydrogène la pile à combustible, le circuit principal de fluide caloporteur comprenant un premier échangeur de chaleur traversé par le fluide caloporteur et par l'hydrogène produit par le reformeur.

Dans un autre mode de réalisation, le dispositif comprend un moteur électrique et des moyens électroniques de commande du moteur électrique, le circuit auxiliaire de fluide caloporteur comprenant un septième échangeur refroidissant le moteur électrique et un huitième échangeur refroidissant les moyens électroniques de commande.

Le dispositif peut comprendre avantageusement un compresseur à deux étages de compression alimentant en air la pile à combustible, le circuit principal de fluide caloporteur peut comprendre un deuxième échangeur traversé par le fluide caloporteur et par l'air du premier étage du compresseur et le circuit auxiliaire de fluide caloporteur peut également comprendre un troisième échangeur traversé par le fluide caloporteur et par l'air sortant du deuxième échangeur se trouvant dans le-circuit principal de fluide caloporteur.

Le dispositif de refroidissement présente l'avantage de pouvoir refroidir l'air comprimé d'environ 190°C jusqu'à la température de fonctionnement de la pile par le circuit principal de fluide caloporteur, et de la température de fonctionnement de la pile jusqu'à environ 70°C par le circuit auxiliaire de fluide caloporteur. Le deuxième et le troisième échangeur peuvent former un seul échangeur du type échangeur à contre-courant. Le circuit principal de fluide caloporteur refroidit en grande partie l'air comprimé permettant ainsi de réduire l'encombrement du dispositif de refroidissement. En effet, pour évacuer une même quantité de chaleur, le premier radiateur nécessite une surface deux fois moins importante que celle du second radiateur, avec une perte de charge trois fois moins élevée.

Le circuit principal de fluide caloporteur peut avantageusement comprendre un quatrième échangeur traversé par le fluide caloporteur et par l'air sortant du deuxième étage du compresseur.

Dans un mode de réalisation, le circuit secondaire de fluide caloporteur comprend au moins un cinquième échangeur thermique traversé par les gaz de sortie de la pile à combustible et par le fluide caloporteur.

Le dispositif de refroidissement présente l'avantage d'être particulièrement compact. En effet, l'utilisation d'échangeurs thermiques du type gaz/liquide caloporteur, afin de refroidir les différents gaz circulants dans l'ensemble de génération d'électricité permet d'augmenter la compacité du système par rapport à une utilisation d'échangeur thermique de type radiateur.

Avantageusement au moins deux échangeurs du circuit principal et/ou auxiliaire de fluide caloporteur sont montés en parallèle.

L'invention concerne également un procédé de refroidissement pour un ensemble de génération d'électricité comprenant une pile à combustible au moyen d'une circulation de fluide caloporteur, dans lequel on sépare en aval de la pile à combustible le fluide caloporteur en un circuit principal et un circuit auxiliaire en dérivation sur le circuit principal pour recevoir une partie du fluide caloporteur dudit circuit principal, on fait circuler le fluide dans les deux circuits à une température inférieure à la température de fonctionnement optimale de la pile à combustible, on prélève les calories du fluide caloporteur du circuit principal lorsque la température du fluide caloporteur du circuit principal atteint la température de fonctionnement optimale de la pile à combustible, et on prélève les calories du fluide caloporteur du circuit auxiliaire de façon que la température du fluide caloporteur du circuit auxiliaire soit inférieure à la température du fluide caloporteur du circuit principal.

Avantageusement, pour un ensemble de génération d'électricité comprenant un compresseur à deux étages de compression, on effectue un premier échange thermique entre l'air sortant du premier étage de compression et le fluide caloporteur du circuit principal, et on effectue un deuxième échange thermique entre l'air sortant du premier échangeur et le fluide caloporteur du circuit auxiliaire.

L'invention sera mieux comprise à l'étude de la description détaillée de modes de réalisation décrits à titre d'exemples nullement limitatifs, et illustrés par les dessins annexés sur lesquels :
- la figure 1 montre schématiquement un ensemble de génération d'électricité comprenant une pile à combustible et son dispositif de refroidissement selon un premier mode de réalisation de l'invention,
- la figure 2 montre schématiquement un échangeur de chaleur du dispositif de refroidissement de la figure1,
- la figure 3 montre schématiquement un ensemble de génération d'électricité comprenant une pile à combustible et son dispositif de refroidissement selon un second mode de réalisation de l'invention,
- la figure 4 montre schématiquement un ensemble de génération d'électricité comprenant une pile à combustible et son dispositif de refroidissement selon un troisième mode de réalisation de l'invention,
- la figure 5 montre schématiquement un ensemble de génération d'électricité comprenant une pile à combustible et son dispositif de refroidissement selon un quatrième mode de réalisation de l'invention, et
- la figure 6 montre schématiquement un ensemble de génération d'électricité comprenant une pile à combustible et son dispositif de refroidissement selon un cinquième mode de réalisation de l'invention.

Les flèches en trait fort correspondent à des conduites qui sont traversées par un fluide caloporteur, et les flèches en traits interrompus correspondent à des conduites traversées par des gaz.

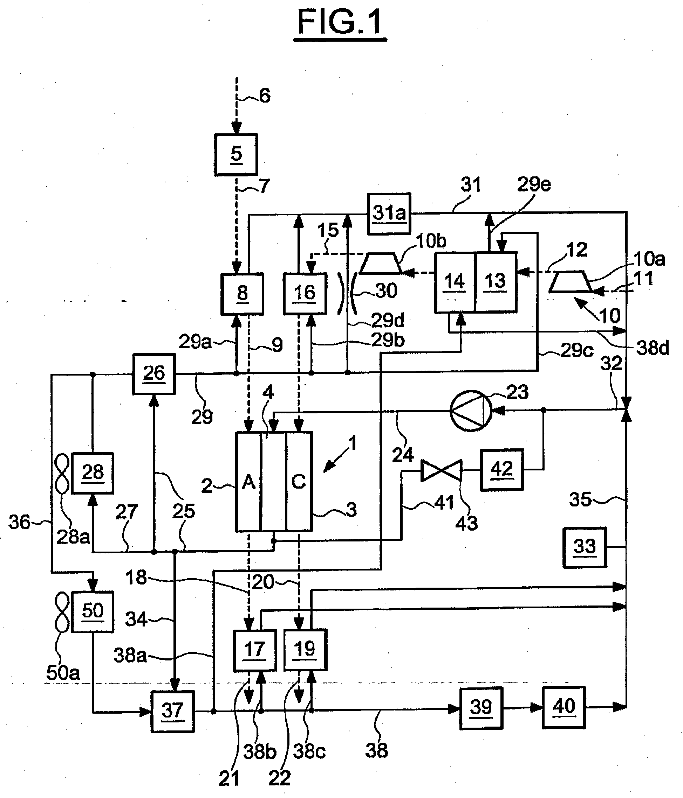

Sur la figure 1, une pile à combustible 1 comprend une anode 2 et une cathode 3 séparées par une membrane électrolytique 4 (représentées schématiquement). La pile à combustible 1 peut être avantageusement du type à membrane échangeuse de protons (PEMFC) à électrolyte solide. Une telle pile à combustible est constituée en réalité d'un empilement de cellules élémentaires branchées électriquement en série et séparées par des plaques bipolaires (non représentées sur la figure).

Un reformeur 5 comprend une conduite d'entrée de carburant 6 et une conduite de sortie d'hydrogène 7 sur laquelle est disposé un premier échangeur de chaleur 8, pouvant par exemple être un condenseur de gaz, afin de refroidir l'hydrogène produit par le procédé de reformage. Le premier échangeur de chaleur 8 est relié à l'entrée de l'anode 2 de la pile à combustible par une conduite 9.

Un compresser 10 comprenant un premier étage de compression 10a est alimenté en air par une conduite d'amenée 11. L'air comprimé issu du premier étage de compression 10a traverse, au moyen d'une conduite 12, un deuxième échangeur thermique 13 puis un troisième échangeur thermique 14. La conduite 12, transportant l'air comprimé issu du premier étage de compression 10a du compresseur 10, est reliée à un deuxième étage de compression 10b du compresseur 10. L'air comprimé issu du deuxième étage de compression 10b traverse au moyen d'une conduite 15 un quatrième échangeur thermique 16 et alimente la cathode 3 de la pile à combustible 1.

Les gaz d'échappement issus de l'anode 2 et de la cathode 3 de la pile à combustible 1 sont dirigés respectivement vers un cinquième échangeur de chaleur 17 par une conduite de sortie anodique 18, et vers un sixième échangeur de chaleur 19 par une conduite de sortie cathodique 20. Le cinquième échangeur de chaleur 17 et le sixième échangeur de chaleur 19 peuvent être par exemple des condenseurs. Les gaz d'échappement sont ensuite dirigés vers des conduites 21 et 22, et peuvent être rejetés dans l'air ambiant ou bien être utilisés pour être valorisés dans des systèmes de conception connue, par exemple dans une turbine de détente (non représentée).

Le dispositif de refroidissement comprend un circuit principal et un circuit auxiliaire de fluide caloporteur, le fluide caloporteur étant ici un liquide. Le circuit principal de fluide caloporteur comprend une pompe 23 permettant notamment la circulation du fluide caloporteur à l'intérieur de la membrane électrolytique 4 par une conduite d'amenée 24, reliée rigidement à une conduite de sortie 25. En réalité, le fluide caloporteur traverse la pile à combustible 1 par l'addition dans l'épaisseur des plaques bipolaires de conduites de refroidissement reliées à la conduite d'amenée 24.

La conduite 25 de sortie est reliée à un premier moyen d'obturation 26 de la circulation du fluide caloporteur. Une conduite 27 est reliée à la conduite 25 et au premier moyen d'obturation 26. La conduite 27 traverse un premier radiateur 28 sur lequel est monté un premier ventilateur 28a.

Le premier moyen d'obturation 26 peut être par exemple un thermostat à double effet comprenant deux clapets liés par un ressort et un élément sensible à la température (non représentés), pouvant être en cire. Lorsque la température de fluide caloporteur est inférieure à une valeur prédéterminée, pouvant être par exemple inférieure de 5°C à la température de fonctionnement optimale de la pile à combustible 1, l'un des clapets bouche la conduite 27 traversant le premier radiateur 28, l'autre clapet permettant le passage du fluide caloporteur amené par la conduite 25. Lorsque la température du fluide caloporteur est égale à la valeur prédéterminée, la cire commence à fondre provoquant sa dilatation et faisant se déplacer les clapets de manière que le clapet en face de la conduite 25 bloque la circulation de fluide caloporteur, l'autre clapet permettant la circulation du fluide caloporteur venant de la conduite 27. Dans une variante de réalisation, le premier moyen d'obturation 26 peut être une vanne ou tout autre mécanisme permettant de couper ou de laisser libre le passage du fluide caloporteur.

Le premier moyen d'obturation 26 est relié à une conduite 29 comprenant des conduites dérivées, référencées 29a à 29c, traversant respectivement le premier, le quatrième et le deuxième échangeur thermique référencés 8, 16 et 13. Une conduite 29d, montée en dérivation par rapport aux conduites 29a à 29c, comprend un élément d'ajustage de débit 30, apte à limiter le débit de circulation de fluide caloporteur dans le premier, le quatrième et le deuxième échangeur thermique 8, 16 et 13 afin d'obtenir un bon refroidissement de la pile à combustible.

Les conduites dérivées 29a à 29d sont reliées à une conduite de retour 31, elle-même reliée à une conduite 32 en communication avec la pompe 23.

Le circuit principal peut également comprendre un dé-ioniseur 31a, situé de façon non limitative sur la conduite 31, afin d'assurer l'isolation électrique entre le liquide caloporteur et la pile à combustible 1.

Le circuit auxiliaire de fluide caloporteur comprend une conduite d'entrée 36, montée en aval du premier radiateur 28 et en amont du premier moyen d'obturation 26. La conduite 36, reliée à la conduite 27, traverse un second radiateur 50 sur lequel est monté un second ventilateur 50a puis traverse un second moyen d'obturation 37. Le second moyen d'obturation 37 est également traversé par une conduite 34 montée en amont du premier radiateur 28 et reliée à la conduite 25. Le second moyen d'obturation 37 permet de couper ou de laisser libre le passage de la conduite 36 ou de la conduite 34. Le second moyen d'obturation 37 est du même type que le premier moyen d'obturation 26, mais se déclenche à une valeur de consigne inférieure à celle du premier moyen 26, pouvant être par exemple 55°C. Le second moyen d'obturation 37 est relié à une conduite 38 traversant un septième échangeur thermique 39 afin de refroidir les moyens de commande du moteur électrique et d'une chaîne de traction, par exemple des convertisseurs et des onduleurs (non représentés), et un huitième échangeur thermique 40 afin de refroidir un moteur électrique (non représenté) apte à utiliser l'énergie produite par la pile à combustible 1. La conduite 38, reliée à une conduite de retour 35, comprend également des conduites dérivées référencées 38a à 38c traversant respectivement le troisième, le cinquième et le sixième échangeur thermique 14, 17, 19. La conduite 38a est reliée à la conduite de retour 31, les conduites 38b et 38c étant reliées à la conduite de retour 35.

Un vase d'expansion 33 est monté ici au niveau de la conduite 35, avant l'entrée de la pompe 23, afin de limiter la pression du circuit principal.

Le dispositif de refroidissement comprend également une conduite 41 reliant la conduite 32 et la conduite 25 de sortie de la pile à combustible 1. La conduite 41 traverse un radiateur de chauffage 42 apte à assurer le chauffage de l'habitacle du véhicule automobile et une vanne 43 apte à couper la circulation du fluide caloporteur lorsque le chauffage n'est pas requis par l'utilisateur du véhicule automobile.

Le fonctionnement du dispositif de refroidissement est le suivant : lors du démarrage de la pile à combustible 1, la pompe 23 est mise en marche, le premier et le second moyen d'obturation 26 et 37 fermant respectivement les conduites 27 et 36. Le fluide caloporteur traverse la pile à combustible 1, puis par les conduites 29 et 34, par l'intermédiaire de la conduite 25, afin de traverser les échangeurs thermiques 8, 13, 14, 16, 17, 19, 39, 40, une partie du fluide caloporteur revenant directement à la pompe 23 en passant par la branche 29d. Lorsque la température de la pile à combustible 1 atteint 55°C, le second moyen d'obturation 37 ouvre progressivement la conduite 36 tout en refermant progressivement et simultanément la conduite 34. Lorsque la température de la pile à combustible atteint 80°C, le premier moyen d'obturation 26 ouvre progressivement la conduite 27 tout en refermant progressivement et simultanément la conduite 25. Si la quantité de chaleur évacuée par les radiateurs 28 et 50 est inférieure à la quantité de chaleur apportée au fluide caloporteur par les différents échangeurs thermiques 8, 13, 14, 16, 17, 19, 39, 40 alors la température du fluide caloporteur continue à augmenter provoquant ainsi l'ouverture totale des conduites 27 et 36. Si la quantité de chaleur évacuée par les radiateurs 28 et 50 reste inférieure à la quantité de chaleur apportée au fluide caloporteur par les différents échangeurs thermiques 8, 13, 14, 16, 17, 19, 39, 40 alors les ventilateurs 28a et 50a sont mis en marche afin d'augmenter la quantité de chaleur évacuée par les radiateurs 28 et 50. La température du liquide caloporteur se stabilise lorsque la quantité de chaleur évacuée par les radiateurs 28 et 50 est égale à la quantité de chaleur apportée au fluide caloporteur par les différents échangeurs thermiques 8, 13, 14, 16, 17, 19, 39, 40.

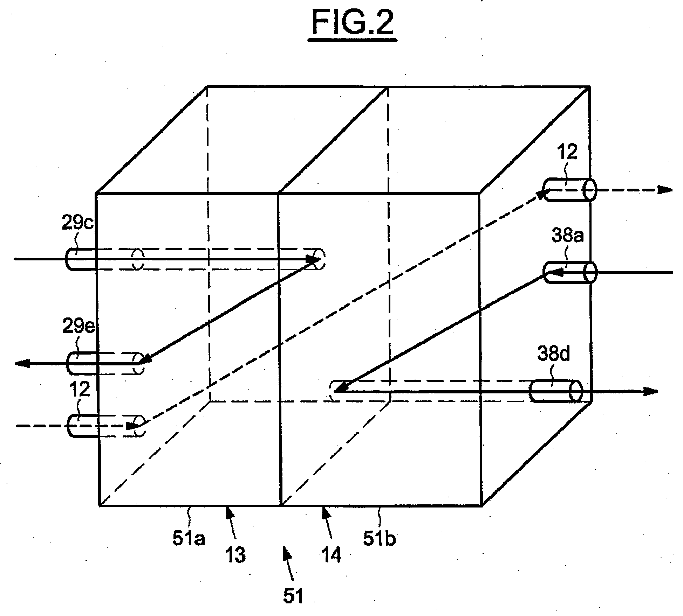

Sur la figure 2, les échangeurs thermiques 13 et 14, représentés schématiquement, forment un seul échangeur 51 du type échangeur à plaques à contre courant comprenant une partie haute température 51a et une partie basse température 51b. Les parties haute et basse température 51a et 51b correspondent respectivement aux échangeurs thermiques 13 et 14.

L'air issu du premier étage de compression du compresseur 10 (figure 1) traverse, par la conduite 12, les plaques (non représentées) de la partie haute température 51a et de la partie basse température 51 b, puis le second étage de compression du compresseur 10 (figure 1). Le liquide caloporteur, sortant du premier radiateur 28 (figure 1) entre par la conduite 29c à l'intérieur de la partie haute température 51a et traverse directement les plaques (non représentées), sans échanger de la chaleur avec l'air traversant la conduite 12. Le liquide caloporteur passe ensuite le long des plaques, en échangeant de la chaleur avec l'air, jusqu'à la conduite de sortie 29e.

Le liquide caloporteur, sortant du second radiateur 50 (figure 1) entre par la conduite 38a à l'intérieur de la partie basse température 51a et passe le long des plaques (non représentées), en échangeant de la chaleur avec l'air traversant la conduite 12, jusqu'à la conduite de sortie 38d. La conduite de sortie 38d traverse directement les plaques sans échanger de la chaleur avec l'air.

Avec un tel échangeur 51, l'air comprimé est refroidi jusqu'à la température de fonctionnement de la pile par le circuit principal de fluide caloporteur, et de la température de fonctionnement de la pile jusqu'à environ 70°C par le circuit auxiliaire de fluide caloporteur. Le circuit principal de fluide caloporteur refroidit en grande partie l'air comprimé permettant ainsi de réduire l'encombrement du dispositif de refroidissement.

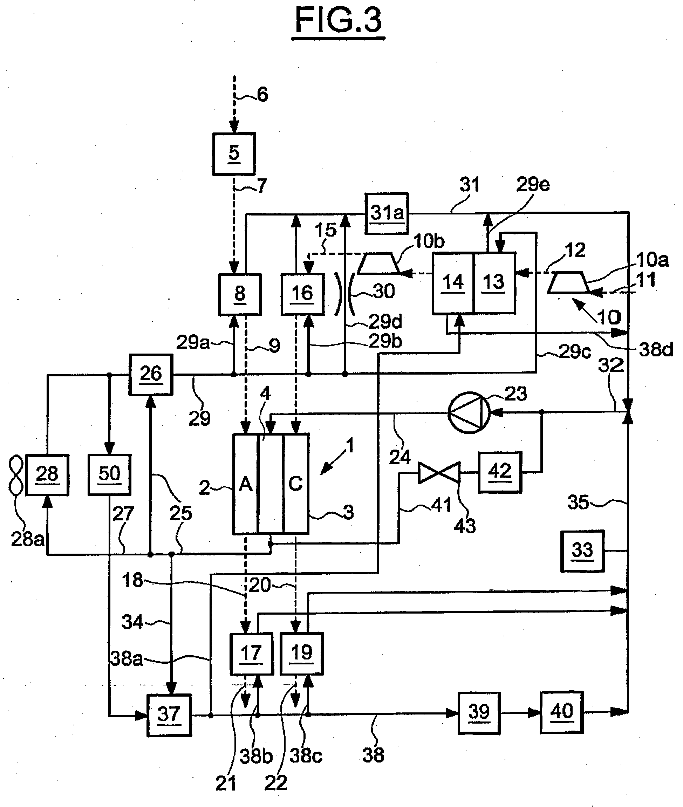

Dans la variante de réalisation illustrée sur la figure 3, sur laquelle les éléments identiques portent les mêmes références, le radiateur 50 du circuit auxiliaire de liquide caloporteur est positionné devant le radiateur 28 du circuit principal de liquide caloporteur, permettant ainsi un refroidissement encore plus performant.

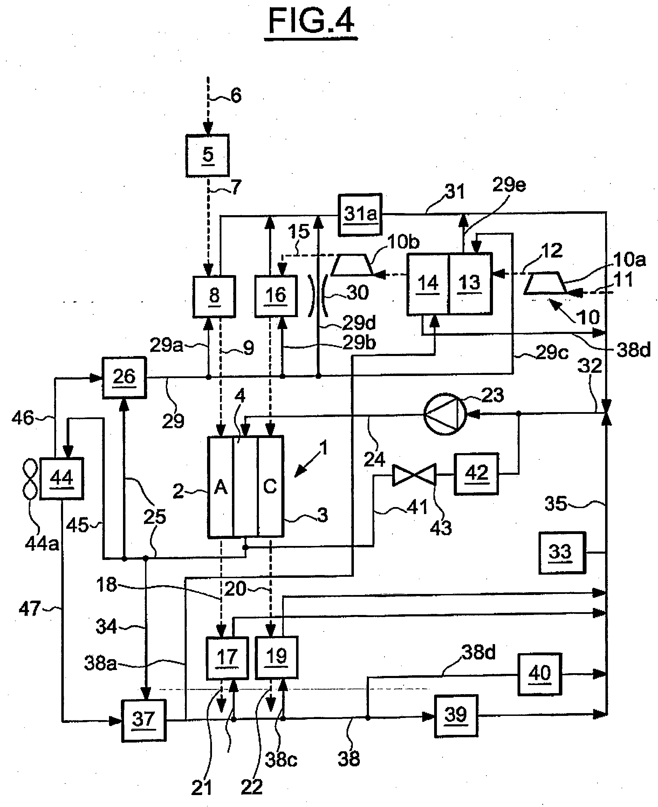

Dans la variante de réalisation illustrée sur la figure 4, sur laquelle les éléments identiques portent les mêmes références, le dispositif de refroidissement comprend un unique radiateur 44 sur lequel est monté un unique ventilateur 44a comprenant une conduite d'entrée 45, prolongeant la conduite 25 de sortie de la pile à combustible, et deux conduites de sortie 46 et 47 reliées respectivement au premier et au second moyen d'obturation 26 et 37. Le radiateur 44 est dimensionné de façon à permettre un échange thermique avec le fluide caloporteur assurant un bon refroidissement de la pile à combustible 1. La conduite 38 comprend une conduite dérivée 38d traversant le huitième échangeur thermique 40 afin de refroidir le moteur électrique (non représenté).

La disposition des échangeurs thermiques 14, 17, 19 et des échangeurs 39 et 40 en parallèle entre eux dans le circuit auxiliaire de refroidissement, ainsi que la disposition des échangeurs thermiques 8, 13, 16 en parallèle entre eux dans le circuit principal de refroidissement permet une régulation thermique et hydraulique des différents échangeurs et radiateurs d'une façon particulièrement simple.

Il est également envisageable, afin d'augmenter la précision de régulation de chaque échangeur, de disposer une vanne de régulation sur chacune des conduites comprenant un échangeur de chaleur.

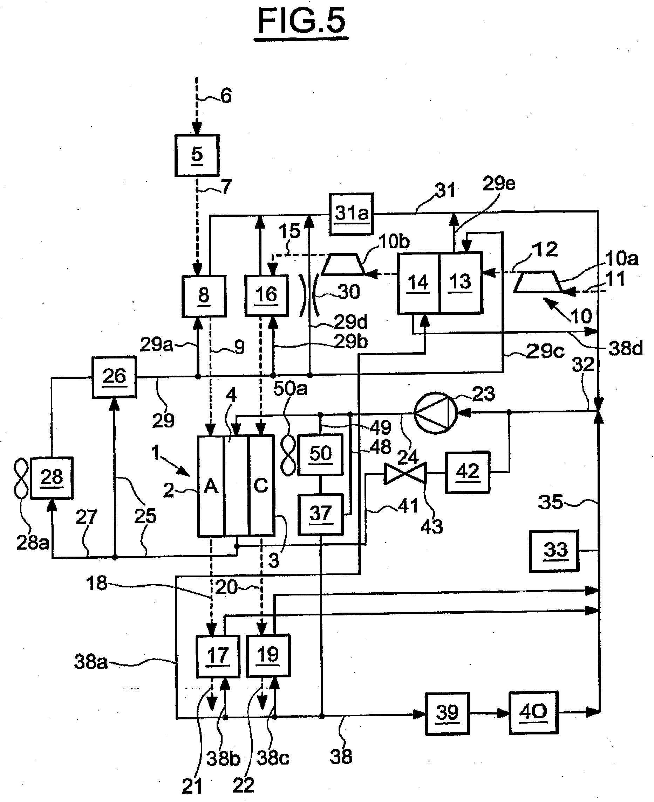

Dans la variante de réalisation illustrée sur la figure 5, sur laquelle les éléments identiques portent les mêmes références, le circuit auxiliaire de fluide caloporteur comprend une conduite d'entrée 49 comprenant le second radiateur 50 et traversant le second moyen d'obturation 37. La conduite 49 est reliée à une extrémité à la conduite 24, et à l'autre extrémité à la conduite 38. Une conduite 48 traversant le second moyen d'obturation 37 et reliée à la conduite 24, en amont de la conduite 49.

Ce mode de réalisation présente l'avantage de réduire les pertes de charges du circuit auxiliaire de fluide caloporteur. En effet, le fluide du circuit auxiliaire ne traverse pas la pile à combustible 1 et le premier radiateur 28. Il devient alors possible d'augmenter le parcours du fluide caloporteur dans le second radiateur 50 et d'augmenter ainsi sa performance thermique. La température du circuit auxiliaire de fluide caloporteur est donc plus basse que dans les modes de réalisation précédemment décrit. En outre, la consommation énergétique de la pompe 23 pour faire circuler le fluide caloporteur est aussi réduite.

Bien entendu, dans ce mode de réalisation, il est également envisageable de remplacer les premier et second radiateurs 28 et 50 par un unique radiateur, ou encore de positionner le radiateur 50 devant le radiateur 28.

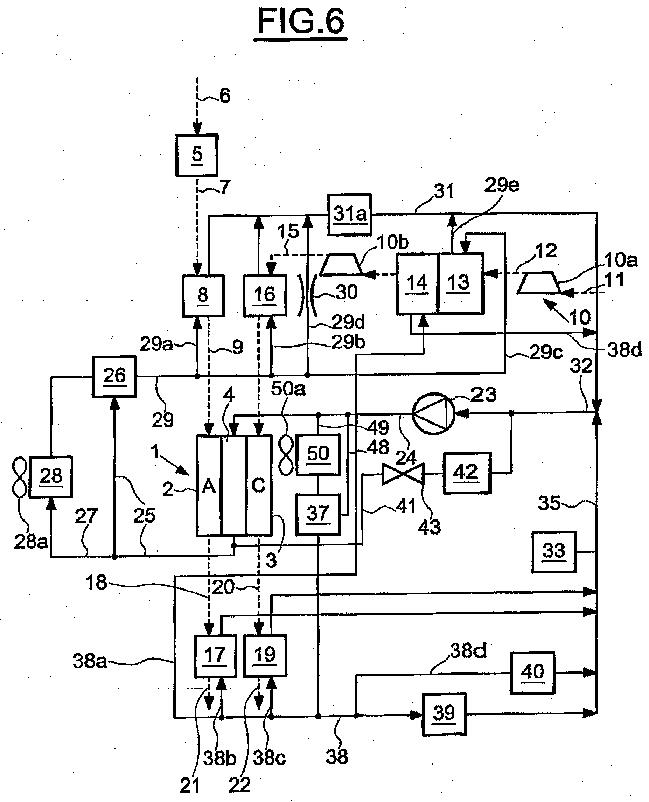

Dans la variante de réalisation illustrée sur la figure 6, sur laquelle les éléments identiques portent les mêmes références la conduite 38 comprend une conduite dérivée 38d traversant le huitième échangeur thermique 40 afin de refroidir le moteur électrique (non représenté).

Quel que soit le mode de réalisation de l'invention, le dispositif permet d'assurer un refroidissement de la pile à combustible et des différents gaz à l'entrée de la pile à une première température, avec un débit important permettant notamment de garder une température homogène à l'intérieur de la pile à combustible, et de réaliser avec le même fluide caloporteur le refroidissement d'autres éléments à une deuxième température, inférieure à la première.

## Revendications

1. Dispositif de refroidissement pour un ensemble de génération d'électricité comprenant une pile à combustible (1) notamment pour véhicule automobile, le dispositif comprenant un circuit principal de fluide caloporteur traversant la pile à combustible et un premier radiateur (28) en aval de la pile à combustible, **caractérisé par le fait qu'**il comprend un circuit auxiliaire de fluide caloporteur en dérivation sur le circuit principal pour recevoir une partie du fluide caloporteur issu du premier radiateur et comprenant un second radiateur (50), en aval du premier radiateur (28), apte à refroidir le fluide caloporteur à une température inférieure à la température du fluide caloporteur dans le circuit principal.

2. Dispositif selon la revendication 1, dans lequel le circuit auxiliaire de fluide caloporteur comprend une conduite d'entrée (36) en aval du premier radiateur et une conduite de retour (35) en amont d'une pompe (23), située en amont de la pile à combustible.

3. Dispositif selon la revendication 1, dans lequel le circuit auxiliaire de fluide caloporteur comprend une conduite d'entrée (49) en amont de la pile à combustible et une conduite de retour (35) en amont d'une pompe (23), située en amont de la pile à combustible.

4. Dispositif selon l'une quelconque des revendications précédentes, comprenant une unique pompe (23) permettant la circulation du fluide caloporteur dans le circuit principal et dans le circuit auxilaire.

5. Dispositif selon l'une quelconque des revendications précédentes, dans lequel le premier radiateur (28) est disposé au niveau d'une branche de dérivation (27) du circuit principal, comprenant un premier moyen (26) d'obturation de la circulation du fluide caloporteur apte à isoler le premier radiateur (28) du circuit principal de fluide caloporteur.

6. Dispositif selon l'une quelconque des revendications précédentes, dans lequel le circuit auxiliaire comprend un second moyen (37) d'obturation de la circulation du fluide caloporteur apte à isoler le deuxième radiateur (50) du circuit auxiliaire de fluide caloporteur.

7. Dispositif selon la revendication 5 ou 6, dans lequel le premier et/ou le deuxième moyen d'obturation sont commandés par la température du fluide caloporteur.

8. Dispositif selon l'une quelconque des revendications précédentes, comprenant un réformeur (5) alimentant en hydrogène la pile à combustible, dans lequel le circuit principal de fluide caloporteur comprend un premier échangeur (8) de chaleur traversé par le fluide caloporteur et par l'hydrogène produit par le réformeur.

9. Dispositif selon l'une quelconque des revendications précédentes, comprenant un moteur électrique et des moyens électroniques de commande du moteur électrique, dans lequel le circuit auxiliaire de fluide caloporteur comprend un septième échangeur (39) refroidissant le moteur électrique et un huitième échangeur (40) refroidissant les moyens électroniques de commande.

10. Dispositif selon l'une quelconque des revendications précédentes, comprenant un compresseur (10) à deux étages de compression alimentant en air la pile à combustible, dans lequel le circuit principal de fluide caloporteur comprend un deuxième échangeur (13) traversé par le fluide caloporteur et par l'air du premier étage (10a) du compresseur et le circuit auxiliaire de fluide caloporteur comprend un troisième échangeur (14) traversé par le fluide caloporteur et par l'air sortant du deuxième échangeur (13) du circuit principal de fluide caloporteur.

11. Dispositif selon la revendication 10, dans lequel les deuxième et troisième échangeurs (13, 14) forment un seul échangeur (51) comprenant une partie haute température traversée par le fluide caloporteur du circuit principal et une partie basse température traversée par le fluide caloporteur du circuit auxiliaire, les parties haute et basse température étant traversées par l'air du premier étage (10a) du compresseur.

12. Dispositif selon les revendications 10 ou 11, dans lequel le circuit principal de fluide caloporteur comprend un quatrième échangeur (16) traversé par le fluide caloporteur et par l'air sortant du deuxième étage (10b) du compresseur.

13. Dispositif selon l'une quelconque des revendications précédentes, dans lequel le circuit secondaire de fluide caloporteur comprend au moins un cinquième échangeur (17) thermique traversé par les gaz de sortie de la pile à combustible et par le fluide caloporteur.

14. Dispositif selon l'une quelconque des revendications précédentes, dans lequel au moins deux échangeurs du circuit principal de fluide caloporteur sont montés en parallèle.

15. Dispositif selon l'une quelconque des revendications précédentes, dans lequel au moins deux échangeurs du circuit auxiliaire de fluide caloporteur sont montés en parallèle.

16. Procédé de refroidissement pour un ensemble de génération d'électricité comprenant une pile à combustible au moyen d'une circulation de fluide caloporteur, dans lequel :
- on sépare en aval de la pile à combustible le fluide caloporteur en un circuit principal et un circuit auxiliaire en dérivation sur le circuit principal pour recevoir une partie du fluide caloporteur dudit circuit principal,
- on fait circuler le fluide dans les deux circuits à une température inférieure à la température de fonctionnement optimale de la pile à combustible,
- on prélève les calories du fluide caloporteur du circuit principal lorsque la température du fluide caloporteur du circuit principal atteint la température de fonctionnement optimale de la pile à combustible, et
- on prélève les calories du fluide caloporteur du circuit auxiliaire de façon que la température du fluide caloporteur du circuit auxiliaire soit inférieure à la température du fluide caloporteur du circuit principal.

17. Procédé selon la revendication 16 pour un ensemble de génération d'électricité comprenant un compresseur à deux étages de compression, dans lequel :
- on effectue un premier échange thermique entre l'air sortant du premier étage de compression et le fluide caloporteur du circuit principal, et
- on effectue un deuxième échange thermique entre l'air sortant du premier échangeur et le fluide caloporteur du circuit auxilaire.

## Patentansprüche

1. Kühlungsvorrichtung für eine Elektrizitätserzeugungsanordnung, die eine Brennstoffzelle (1), insbesondere für Kraftfahrzeuge, enthält, wobei die Vorrichtung einen Wärmeaustauschfluid-Hauptkreis, der durch die Brennstoffzelle verläuft, und einen ersten Kühlkörper (28) stromabseitig der Brennstoffzelle umfasst, **dadurch gekennzeichnet, dass** sie einen Wärmeaustauschfluid-Hilfsfkreis umfasst, der von dem Hauptkreis abgezweigt ist, um einen Teil des Wärmeaustauschfluids aufzunehmen, das von dem ersten Kühlkörper stammt, und einen zweiten Kühlkörper (50) stromabseitig des ersten Kühlkörpers (28) umfasst, der das Wärmeaustauschfluid auf eine Temperatur unterhalb der Temperatur des Wärmeaustauschfluids in dem Hauptkreis kühlen kann.

2. Vorrichtung nach Anspruch 1, wobei der Wärmeaustauschfluid-Hilfskreis eine Eingangsleitung (36) stromabseitig des ersten Kühlkörpers und eine Rückleitung (35) stromaufseitig einer Pumpe (23), die sich stromaufseitig der Brennstoffzelle befindet, umfasst.

3. Vorrichtung nach Anspruch 1, wobei der Wärmeaustauschfluid-Hilfskreis eine Eingangsleitung (49) stromaufseitig der Brennstoffzelle und eine Rückleitung (35) stromaufseitig einer Pumpe (23), die sich stromaufseitig der Brennstoffzelle befindet, umfasst.

4. Vorrichtung nach einem der vorhergehenden Ansprüche, die eine einzige Pumpe (23) umfasst, die die Zirkulation des Wärmeaustauschfluids in dem Hauptkreis und in dem Hilfskreis ermöglicht.

5. Vorrichtung nach einem der vorhergehenden Ansprüche, wobei der erste Kühlkörper (28) auf Höhe eines Abzweigstrangs (27) des Hauptkreises angeordnet ist und ein erstes Mittel (26) zum Sperren der Zirkulation des Wärmeaustauschfluids umfasst, das den ersten Kühlkörper (28) von dem Wärmeaustauschfluid-Hauptkreis trennen kann.

6. Vorrichtung nach einem der vorhergehenden Ansprüche, wobei der Hilfskreis ein zweites Mittel (37) zum Sperren der Zirkulation des Wärmeaustauschfluids umfasst, das den zweiten Kühlkörper (50) von dem Wärmeaustauschfluid-Hilfskreis trennen kann.

7. Vorrichtung nach Anspruch 5 oder 6, wobei das erste und/oder das zweite Sperrmittel durch die Temperatur des Wärmeaustauschfluids gesteuert werden.

8. Vorrichtung nach einem der vorhergehenden Ansprüche, die einen Reformer (5) umfasst, der die Brennstoffzelle mit Wasserstoff versorgt, wobei der Wärmeaustauschfluid-Hauptkreis einen ersten Wärmetauscher (8) umfasst, der von dem Wärmeaustauschfluid und von dem von dem Reformer erzeugten Wasserstoff durchquert wird.

9. Vorrichtung nach einem der vorhergehenden Ansprüche, die einen Elektromotor und elektronische Steuermittel für den Elektromotor umfasst, wobei der Wärmeaustauschfluid-Hilfskreis einen siebten Tauscher (39), der den Elektromotor kühlt, und einen achten Tauscher (40), der die elektronischen Steuermittel kühlt, umfasst.

10. Vorrichtung nach einem der vorhergehenden Ansprüche, die einen Kompressor (10) mit zwei Kompressionsstufen umfasst, der die Brennstoffzelle mit Luft versorgt, wobei der Wärmeaustauschfluid-Hauptkreis einen zweiten Tauscher (13) umfasst, der von dem Wärmeaustauschfluid und von Luft der ersten Stufe (10a) des Kompressors durchquert wird, und der Wärmeaustauschfluid-Hilfskreis einen dritten Tauscher (14) umfasst, der von dem Wärmeaustauschfluid und von der Luft, die den zweiten Tauscher (13) des Wärmeaustauschfluid-Hauptkreises verlässt, durchquert wird.

11. Vorrichtung nach Anspruch 10, wobei der zweite und der dritte Tauscher (13, 14) einen einzigen Tauscher (51) bilden, der einen Hochtemperaturteil, der von dem Wärmeaustauschfluid des Hauptkreises durchquert wird, und einen Niedertemperaturteil, der von dem Wärmeaustauschfluid des Hilfskreises durchquert wird, umfasst, wobei der Hochtemperaturteil und der Niedertemperaturteil von der Luft der ersten Stufe (10a) des Kompressors durchquert werden.

12. Vorrichtung nach Anspruch 10 oder 11, wobei der Wärmeaustauschfluid-Hauptkreis einen vierten Tauscher (16) umfasst, der von dem Wärmeaustauschfluid und von der Luft, die die zweite Stufe (10b) des Kompressors verlässt, durchquert wird.

13. Vorrichtung nach einem der vorhergehenden Ansprüche, wobei der sekundäre Wärmeaustauschfluidkreis wenigstens einen fünften Wärmetauscher (17) umfasst, der von den Ausgangsgasen der Brennstoffzelle und von dem Wärmeaustauschfluid durchquert wird.

14. Vorrichtung nach einem der vorhergehenden Ansprüche, wobei wenigstens zwei Tauscher des Wärmeaustauschfluid-Hauptkreises parallel geschaltet sind.

15. Vorrichtung nach einem der vorhergehenden Ansprüche, wobei wenigstens zwei Tauscher des Wärmeaustauschfluid-Hilfskreises parallel geschaltet sind.

16. Kühlungsverfahren für eine Elektrizitätserzeugungsanordnung, die eine Brennstoffzelle enthält, mittels einer Wärmeaustauschfluid-Zirkulation, wobei:
- stromabseitig der Brennstoffzelle das Wärmeaustauschfluid in einen Hauptkreis und in einen von dem Hauptkreis abzweigenden Hilfskreis, um einen Teil des Wärmeaustauschfluids des Hauptkreises aufzunehmen, getrennt wird,
- eine Zirkulation des Fluids in den zwei Kreisen auf einer Temperatur unterhalb der optimalen Betriebstemperatur der Brennstoffzelle bewirkt wird,
- die Wärmeenergie des Wärmeaustauschfluids des Hauptkreises abgeführt wird, wenn die Temperatur des Wärmeaustauschfluids des Hauptkreises die optimale Betriebstemperatur der Brennstoffzelle erreicht, und
- die Wärmeenergie des Wärmeaustauschfluids des Hilfskreises in der Weise abgeführt wird, dass die Temperatur des Wärmeaustauschfluids des Hilfskreises niedriger ist als die Temperatur des Wärmeaustauschfluids des Hauptkreises.

17. Verfahren nach Anspruch 16 für eine Elektrizitätserzeugungsanordnung, die einen Kompressor mit zwei Kompressionsstufen enthält, wobei:
- ein erster Wärmeaustausch zwischen der die erste Kompressionsstufe verlassenden Luft und dem Wärmeaustauschfluid des Hauptkreises bewerkstelligt wird, und
- ein zweiter Wärmeaustausch zwischen der den ersten Tauscher verlassenden Luft und dem Wärmeaustauschfluid des Hilfskreises bewerkstelligt wird.

## Claims

1. Device for cooling an electricity generating unit comprising a fuel cell (1), in particular for a motor vehicle, the device comprising a principal heat exchange fluid circuit passing through the fuel cell and a first radiator (28) downstream of the fuel cell, **characterized in that** it comprises an auxiliary heat exchange fluid circuit branched off from the principal circuit to receive part of the heat exchange fluid from the first radiator and comprising a second radiator (50) downstream of the first radiator (28) capable of cooling the heat exchange fluid to a lower temperature than the temperature of the heat exchange fluid in the principal circuit.

2. Device according to Claim 1, in which the auxiliary heat exchange fluid circuit comprises an inlet line (36) downstream of the first radiator and a return line (35) upstream of a pump (23) located upstream of the fuel cell.

3. Device according to Claim 1, in which the auxiliary heat exchange fluid circuit comprises an inlet line (49) upstream of the fuel cell and a return line (35) upstream of a pump (23) located upstream of the fuel cell.

4. Device according to any one of the preceding claims, comprising a single pump (23) permitting the circulation of the heat exchange fluid in the principal circuit and in the auxiliary circuit.

5. Device according to any one of the preceding claims, in which the first radiator (28) is arranged in the region of a bypass branch (27) of the principal circuit, comprising a first shut-off means (26) for the circulation of heat exchange fluid, capable of isolating the first radiator (28) from the principal heat exchange fluid circuit.

6. Device according to any one of the preceding claims, in which the auxiliary circuit comprises a second shut-off means (37) for the circulation of heat exchange fluid, capable of isolating the second radiator (50) from the auxiliary heat exchange fluid circuit.

7. Device according to Claim 5 or 6, in which the first and/or the second shut-off means are controlled by the temperature of the heat exchange fluid.

8. Device according to any one of the preceding claims, comprising a reformer (5) supplying the fuel cell with hydrogen, in which the principal heat exchange fluid circuit comprises a first heat exchanger (8) through which the heat exchange fluid and the hydrogen produced by the reformer pass.

9. Device according to any one of the preceding claims, comprising an electric motor and electronic control means of the electric motor, in which the auxiliary heat exchange fluid circuit comprises a seventh exchanger (39) cooling the electric motor and an eighth exchanger (40) cooling the electronic control means.

10. Device according to any one of the preceding claims, comprising a compressor (10) with two compression stages supplying the fuel cell with air, in which the principal heat exchange fluid circuit comprises a second exchanger (13) through which the heat exchange fluid and the air from the first stage (10a) of the compressor pass and the auxiliary heat exchange fluid circuit comprises a third exchanger (14) through which the heat exchange fluid and the air leaving the second exchanger (13) of the principal heat exchange fluid circuit pass.

11. Device according to Claim 10, in which the second and third exchangers (13, 14) form a single exchanger (51) comprising a high temperature part through which the heat exchange fluid from the principal circuit passes and a low temperature part through which the heat exchange fluid from the auxiliary circuit passes, the air of the first stage (10a) of the compressor passing through the high temperature part and the low temperature part.

12. Device according to Claims 10 or 11, in which the principal heat exchange fluid circuit comprises a fourth exchanger (16) through which the heat exchange fluid and the air leaving the second stage (10b) of the compressor pass.

13. Device according to any one of the preceding claims, in which the secondary heat exchange fluid circuit comprises at least one fifth heat exchanger (17) through which exhaust gases from the fuel cell and the heat exchange fluid pass.

14. Device according to any one of the preceding claims, in which at least two exchangers of the principal heat exchange fluid circuit are mounted in parallel.

15. Device according to any one of the preceding claims, in which at least two exchangers of the auxiliary heat exchange fluid circuit are mounted in parallel.

16. Method for cooling an electricity generating unit comprising a fuel cell by means of a circulation of heat exchange fluid, in which:
- downstream of the fuel cell the heat exchange fluid is separated into a principal circuit and an auxiliary circuit branched off from the principal circuit, to receive part of the heat exchange fluid from said principal circuit,
- the fluid is circulated in the two circuits at a lower temperature than the optimal operating temperature of the fuel cell,
- calories are taken from the heat exchange fluid of the principal circuit when the temperature of the heat exchange fluid of the principal circuit reaches the optimal operating temperature of the fuel cell, and
- calories are taken from the heat exchange fluid of the auxiliary circuit so that the temperature of the heat exchange fluid of the auxiliary circuit is lower than the temperature of the heat exchange fluid of the principal circuit.

17. Method according to Claim 16 for an electricity generating unit comprising a compressor with two compression stages, in which:
- a first heat exchange is carried out between the air leaving the first compression stage and the heat exchange fluid of the principal circuit, and
- a second heat exchange is carried out between the air leaving the first exchanger and the heat exchange fluid of the auxiliary circuit.
